# EUROPÄISCHE PATENTSCHRIFT

(11) **EP 1 423 302 B1**
(45) Veröffentlichungstag und Bekanntmachung des Hinweises auf die Patenterteilung: **10.01.2007**
(21) Anmeldenummer: 02777004.9
(22) Anmeldetag: 05.09.2002
(51) Int. Cl.: B60R 21/20

(54) **FAHRZEUG-DACHAUSKLEIDUNG MIT INTEGRIERTEN KOPF-SEITEN-AIRBAG-MODULEN**
VEHICLE ROOF-LINING COMPRISING INTEGRATED LATERAL AIRBAG MODULES FOR THE HEAD
REVETEMENT DE TOIT DE VEHICULE COMPRENANT DES MODULES COUSSINS GONFLABLES LATERAUX INTEGRES POUR LA TETE

(30) Priorität: 06.09.2001 DE 10143760
(43) Veröffentlichungstag der Anmeldung: 02.06.2004
(73) Patentinhaber: TRW Automotive GmbH, 73553 Alfdorf (DE); Johnson Controls GmbH, 50399 Burscheid (DE)
(72) Erfinder: HEIGL, Jürgen, 73560 Böbingen (DE); MÜLLER, Wolfgang, 42897 Remscheid (DE); GERECKE, Ralf, 66440 Blieskastel (DE); EYRAINER, Heinz, 73529 Schwäbisch Gmünd (DE); HEYER, Rainer, 73557 Mutlangen (DE)
(74) Vertreter: Degwert, Hartmut
(86) Internationale Anmeldenummer: PCT/EP2002/009949
(87) Internationale Veröffentlichungsnummer: WO 2003/022642

(56) Entgegenhaltungen:
- EP-A- 0 903 268
- WO-A-99/65759
- DE-A- 19 812 737
- DE-A- 19 941 269

## Beschreibung

Die Erfindung betrifft eine Fahrzeug-Dachauskleidung mit integrierten Kopf-Seiten-Airbag-Modulen.

Die Module weisen langgestreckte Aufnahmegehäuse für je einen gefalteten Gassack auf und sind entlang den Seitenrändern der Dachauskleidung angeordnet. Jedes der Aufnahmegehäuse ist mit zumindest Teilen einer Stützstruktur auf einem allgemein flachen Formkörper mit wenigstens einer in Längsrichtung verlaufenden Scharnierlinie durch Zusammenklappen der Formkörperteile beiderseits der Scharnierlinie gebildet.

Herkömmliche Kopf-Seiten-Airbag-Module werden in einem langgestreckten Aufnahmegehäuse entlang einer Dachkante des Fahrzeugs unter der Dachauskleidung verstaut. Im aktivierten Zustand erstreckt sich der aufgeblasene Gassack wie ein Vorhang von der A-Säule bis zur C-Säule und deckt die Seitenscheiben sowie die B-Säule ab. In dem einen Schußkanal bildenden Aufnahmegehäuse ist der gefaltete Gassack mit einem Gasverteilerrohr angeordnet. An einem freien Ende des Gasverteilerrohres ist ein im allgemeinen pyrotechnischer Gasgenerator angeschlossen. Das Aufnahmegehäuse mit gefaltetem Gassack und Gasverteilerrohr bildet eine eigenständige Baugruppe, die unter der Dachkante des Fahrzeugs montiert wird, bevor die Dachauskleidung angebracht wird.

EP 0 903 268 B1 offenbart ein Kopf-Seitengassack-Rückhaltesystem für Fahrzeuginsassen mit einem langgestreckten, U-förmigen Aufnahmebehälter für den Gassack. Der Behälter wird durch eine Klappe geschlossen, die beim Entfalten des Gassacks aufgeschwenkt wird. An dieser Klappe sind Strukturen mit Ausnehmungen oder Hohlräumen angebracht, die bei Aufschlag eines Kopfes plastisch deformiert werden und somit die Verletzungsgefahr des Insassen herabsetzen. Auch DE 199 41 269 A1 befaßt sich mit der Energieabsorption unter Umständen, die eine Entfaltung des Seitenairbags nicht erfordern. Die genannte Offenlegungsschrift schlägt daher ein Fahrzeugverkleidungssystem mit einem Airbag vor, der bevorzugt an den A-Säulen des Fahrzeugs befestigt wird. Die Energieabsorptionswirkung wird durch ein dünnes Blech erreicht, mit der A-Säule einen Hohlraum bildet. Dieses Blech dient gleichzeitig zur Abdeckung des Airbags.

DE 198 12 737 A1 zeigt einen Seitenairbag mit Energieabsorptionselement, wobei das Gehäuse zur Aufnahme des Seitenairbags an seinem dem Kopfbereich des Fahrzeuginsassen zugewandten Abschnitt ein mit abgerundeten Aufprallflächen versehenes Profil aufweist. Gehäuse und Hohlprofil sind als einstückiges Bauteil geformt, an dem eine Abdeckklappe montiert ist.

EP 0 952 044 B1 gegen du Anspruch 1 abgegrenzt ist zeigt ein Gassack-Modul für ein Fahrzeuginsassen-Rückhaltesystem, dessen langgestrecktes Gehäuse einen Hohlraum für einen Strömungskanal, und einen Hohlraum für den zusammengefalteten Gassack umfaßt. Das Gehäuse ist aus zwei Seitenteilen gebildet, die je nach Ausführungsform in unterschiedlicher Weise miteinander verbunden sind.

Die PCT-Anmeldung WO 99/65759 betrifft die Modulfertigung im Fahrzeugbereich. Dabei kann eine Dachgruppe vor dem Zusammenbau mit einer Bodengruppe bereits mit Einbauteilen wie beispielsweise Airbag-Modulen für Seiten-Airbags bestückt sein.

Die Erfindung stellt eine Fahrzeug-Dachauskleidung mit integrierten Kopf-Seiten-Airbag-Modulen zur Verfügung, die dadurch gekennzeichnet ist, daß der die Schenkel des Aufnahmegehäuses verbindende Bodenbereich aus zwei im wesentlichen komplementären, im wesentlichen halbzylinderförmigen Formteilen gebildet ist, die sich, entlang der Scharnierlinie aufeinandergeklappt, zu einem langgestreckten Hohlkörper ergänzen.

Die Erfindung schlägt vor, die Kopf-Seiten-Airbag-Module in der Fahrzeug-Dachauskleidung zu integrieren. Die Dachauskleidung wird mit den integrierten Airbag-Modulen als Baugruppe im Fahrzeug montiert. Dadurch ergeben sich beim Automobilhersteller erhebliche Einsparungen bei der Montage und eine genauere Plazierung der Airbag-Module im Fahrzeug, da Montagetoleranzen entfallen. Die langgestreckten Aufnahmegehäuse für je einen gefalteten Gassack sind entlang den Seitenrändern der Dachauskleidung angeordnet. Bei der bevorzugten Ausführungsform sind die Aufnahmegehäuse mit der Dachauskleidung in Verbund gebracht, insbesondere verklebt. Dadurch ist die Lage der Aufnahmegehäuse relativ zur Dachauskleidung präzise festgelegt. Der Verbund von Dachauskleidung und Aufnahmegehäusen bildet eine steife, gut handhabbare Baugruppe.

Eine besonders vorteilhafte Weiterbildung der Erfindung besteht darin, daß die Aufnahmegehäuse jeweils zur Seite der Dachauskleidung mit einer Stützrippen aufweisenden Stützstruktur verbunden sind, die ihrerseits mit der Dachauskleidung in Verbund gebracht ist. Auch zur Seite der Fahrzeugkarosserie hin sind die Aufnahmegehäuse vorzugsweise mit einer Stützrippen aufweisenden Stützstruktur verbunden, die mit der Fahrzeugkarosserie verbunden wird. Durch die mit zahlreichen Stützrippen versehenen Stützstrukturen wird nicht nur die Dachauskleidung versteift; vielmehr bietet die so ausgestattete Dachauskleidung auch einen hervorragenden Aufprallschutz, der durch plastische Verformung Energie absorbiert.

Weitere Merkmale und Vorteile der Erfindung ergeben sich aus der folgenden Beschreibung bevorzugter Ausführungsformen und aus den beigefügten Zeichnungen, auf die bezug genommen wird.

In den Zeichnungen zeigen:
- Figur 1 einen Abschnitt einer Fahrzeug-Dachauskleidung in Perspektive;
- Figur 2 eine Schnittansicht der Dachauskleidung im Normalzustand;
- Figur 3 eine Schnittansicht der Dachauskleidung nach Aktivierung des darin integrierten Kopf-Seiten-Airbag-Moduls;
- Figur 4a bis 4d schematische Schnittansichten eines Formteils, aus dem ein Aufnahmegehäuse für einen gefalteten Gassack durch Umklappen entlang Scharnierlinien gebildet wird; und
- -Figur 5 eine perspektivische Teilansicht eines Fortsatzes der Dachauskleidung mit daran angeordnetem Gasgenerator.

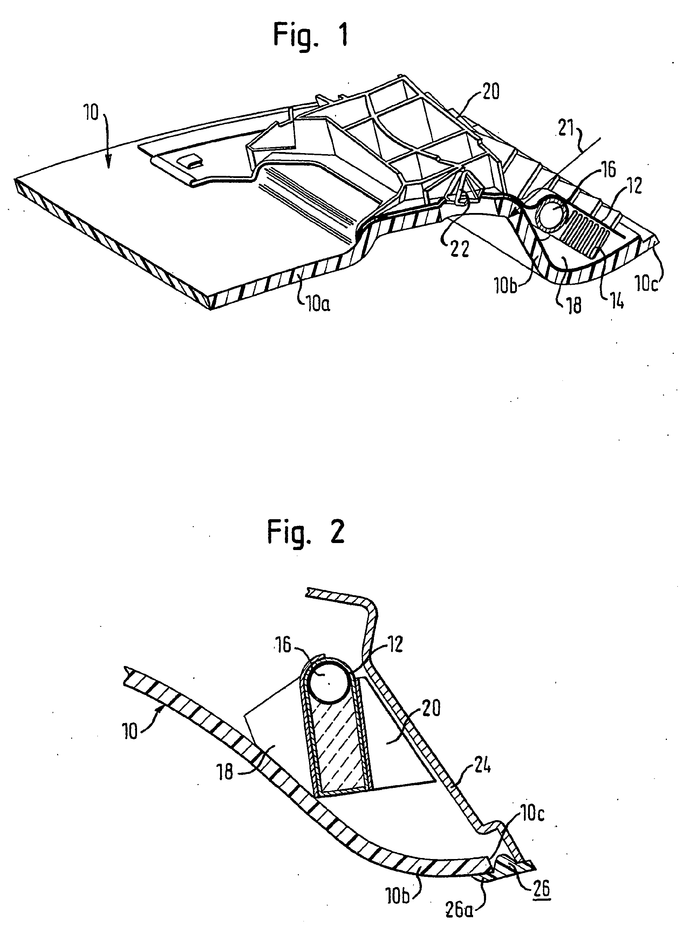

Der in Figur 1 gezeigte Ausschnitt einer Dachauskleidung für Fahrzeuge entspricht einem seitlichem Randbereich unter einer Dachkante der Fahrzeugkarosserie. Die Dachauskleidung besteht aus einer geschäumten Kunststoffplatte 10 mit einem flachen Mittelbereich 10a und einem gewölbten Randbereich lOb. Der gewölbte Randbereich 10b bildet zur Fahrzeugkarosserie hin einen allgemein rinnenförmigen Raum, in dem ein langgestrecktes, im Querschnitt U-förmiges Aufnahmegehäuse 12 für einen gefalteten Gassack 14 aufgenommen ist. Das Aufnahmegehäuse 12 hat zwei parallele, durch einen gewölbten Boden verbundene Schenkel. Im Bereich des gewölbten Bodens ist ein Gasverteilerrohr 16 angeordnet, das sich über die gesamte Länge des Aufnahmegehäuses 12 erstreckt.

Auf seiner der Dachauskleidung zugewandten Seite ist das Aufnahmegehäuse 12 mit einer Stützstruktur 18 verbunden, die an dem benachbarten Schenkel des Aufnahmegehäuses anliegt; die Stützstruktur 18 hat eine Vielzahl von in Längsrichtung des Aufnahmegehäuses 12 beabstandeten Stützrippen und ist mit der Dachauskleidung 10 durch Verkleben in Verbund gebracht. Eine weitere, durch eine Vielzahl von Stützrippen gebildete Stützstruktur 20 befindet sich auf der Seite des Aufnahmegehäuses 12, die der Fahrzeugkarosserie zugewandt ist. Die Stützstruktur 20 ist mit dem von der Dachauskleidung 10 abgewandten Schenkel des Aufnahmegehäuses 12 in Verbund gebracht. Die Stützstruktur 20 deckt das Aufnahmegehäuse 12 vollständig ab und ist über dieses hinaus in Richtung der Fahrzeugmitte verlängert. Der über das Aufnahmegehäuse 12 hinausstehende Teil der Stützstruktur 20 ist flächig mit der Dachauskleidung 10 verbunden, insbesondere durch eine Verklebung. Zur Befestigung der Dachauskleidung an der Fahrzeugkarosserie sind Rastelemente vorgesehen, von denen in Figur 1 nur eines, mit 22 bezeichnet, dargestellt ist. Die Rastelemente 22 werden in entsprechende Befestigungslöcher der Fahrzeugkarosserie eingesetzt und eingedrückt. Die angestrebte Paßgenauigkeit ergibt sich dabei ohne weitere Maßnahmen.

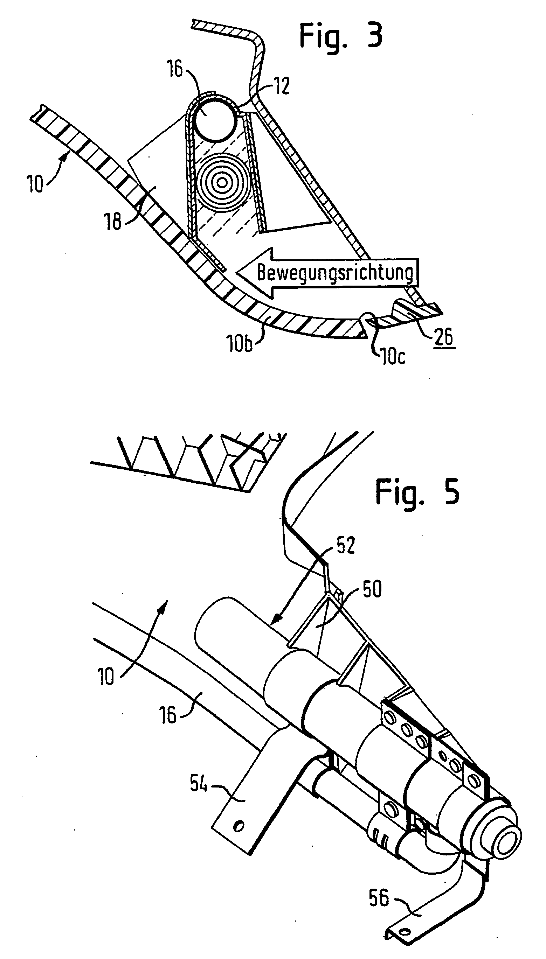

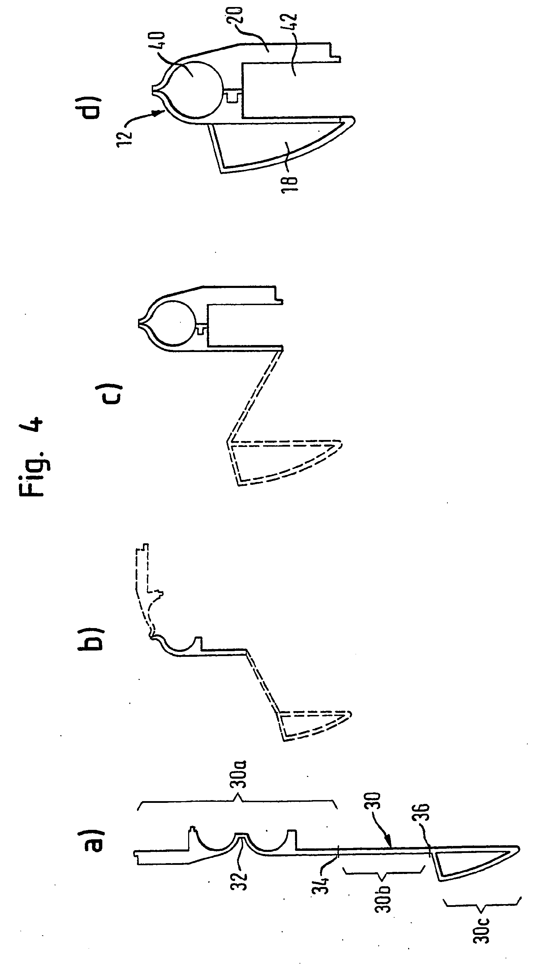

Wie in Figur 2 gezeigt ist, ist an der Dachkante der Fahrzeugkarosserie 24 ein Keder 26 angesetzt, der mit einer Lippe 26a den seitlichen Rand 10c der Dachauskleidung 10 übergreift. Bei Aktivierung des am freien Ende des Gasverteilerrohres 16 angeschlossenen pyrotechnischen Gasgenerators werden, wie in Figur 3 veranschaulicht, die Schenkel des Aufnahmegehäuses 12 auseinandergedrückt, wobei der über die Stützstruktur 18 auf die Dachauskleidung 10 drückende Schenkel des Aufnahmegehäuses 12 den seitlichen Randbereich 10b der Dachauskleidung 10 zur Fahrzeugmitte hin verlagert. Der seitliche Rand 10c der Dachauskleidung 10 kommt von dem Keder 26 frei, so daß die Dachauskleidung 10 weiter nachgeben und dem sich nun entfaltenden Gassack ausweichen kann. Durch die im Querschnitt U-förmige Ausbildung des Aufnahmegehäuses 12 wird ein Schußkanal gebildet, der dem sich entfaltenden Gassack die gewünschte Entfaltungsrichtung verleiht.

Bei der in Figur 1 gezeigten Ausführungsform ist die Stützstruktur 20 entlang dem Übergang zum Aufnahmegehäuse 12 mit einer durch Reduzierung der Materialdichte gebildeten Klapplinie versehen, die durch einen Hinweispfeil 21 in Figur 1 angedeutet ist. Entlang dieser Klapplinie wird dann auch die Dachauskleidung 10 bei Aktivierung des Airbag-Moduls aufgeklappt.

Durch den Verbund zwischen Dachauskleidung und Stützstruktur mit Stützrippen ist ein energieabsorbierender Aufprallschutz gebildet.

Bei der in Figur 4 dargestellten Ausführungsform wird das Aufnahmegehäuse 12 mit zumindest Teilen der Stützstrukturen 18, 20 aus einem allgemein flachen Formkörper gebildet, wie in Figur 4a gezeigt. Der Formkörper, allgemein mit 30 in Figur 4a bezeichnet, wird durch Spritzgießen von Kunststoff als langgestrecktes, flaches Profilteil hergestellt. Der Formkörper 30 hat einen ersten Bereich 30a, in dessen Mitte eine Scharnierlinie 32 ausgebildet ist, einen zweiten Bereich 30b, der durch Verbindungsstege gebildet ist, und einen dritten Bereich 30c, aus dem die der Dachauskleidung zugewandte Stützstruktur 18 gebildet wird. Am Übergang zwischen den Bereichen 30a und 30b befindet sich eine zweite Scharnierlinie 34. Eine dritte Scharnierlinie 36 befindet sich am Übergang zwischen den Bereichen 30b und 30c. Die beiden Hälften des Bereiches 30a sind komplementär und bilden im aufeinandergeklappten Zustand zusammen das Aufnahmegehäuse 12. Die Figuren 4b, 4c und 4d zeigen, wie die verschiedenen Bereiche 30a, 30b und 30c an den Scharnierlinien 32, 34 und 36 zusammengeklappt werden, um aus einem einzigen Formkörper sowohl das Aufnahmegehäuse 12 als auch zumindest Teile der Stützstrukturen 18, 20 herzustellen.

Eine weitere, aus Figur 4 hervorgehende Besonderheit ist die Gestaltung des Innenraumes des Aufnahmegehäuses 12. Die aufeinandergeklappten Hälften des Bereiches 30a des Formkörpers 30 bilden am Boden einen hohlzylindrischen Aufnahmeraum 40 für das Gasverteilerrohr 16 und daran anschließend, durch aufeinandergeklappte Stege abgetrennt, einen allgemein quaderförmigen Aufnahmeraum 42 für den gefalteten Gassack.

Wie aus Figur 5 hervorgeht, hat die Dachauskleidung 10 am Übergang zur C-Säule der Fahrzeugkarosserie je einen Fortsatz 50, an dem ein pyrotechnischer Gasgenerator 52 angeordnet ist. Der Gasgenerator 52 ist an dem freien Ende des Gasverteilerrohres 16 angeschlossen. Mittels zwei Befestigungsblechen 54, 56 wird der Gasgenerator an der Fahrzeugkarosserie befestigt.

## Patentansprüche

1. Fahrzeug-Dachauskleidung mit integrierten Kopf-Seiten-Airbag-Modulen, die langgestreckte Aufnahmegehäuse (12) für je einen gefalteten Gassack (14) aufweisen und entlang den Seitenrändern der Dachauskleidung (10) angeordnet sind, wobei jedes der Aufnahmegehäuse (12) mit zumindest Teilen einer Stützstruktur (18) aus einem allgemein flachen Formkörper (30) mit wenigstens einer in Längsrichtung verlaufenden Scharnierlinie (32) durch Zusammenklappen der Formkörperteile beiderseits der Scharnierlinie (32) gebildet ist, **dadurch gekennzeichnet, daß** der die Schenkel des Aufnahmegehäuses (12) verbindende Bodenbereich aus zwei im wesentlichen komplementären, im wesentlichen halbzylinderförmigen Formteilen gebildet ist, die sich, entlang der Scharnierlinie (32) aufeinandergeklappt, zu einem langgestreckten Hohlkörper ergänzen.

2. Fahrzeug-Dachauskleidung nach Anspruch 1, **dadurch gekennzeichnet, daß** die Aufnahmegehäuse (12) jeweils zur Seite der Fahrzeugkarosserie mit einer Stützrippen aufweisenden Stützstruktur (20) verbunden sind.

3. Fahrzeug-Dachauskleidung nach Anspruch 2, **dadurch gekennzeichnet, daß** jede Stützstruktur (20) mit dem von der Dachauskleidung (10) abgewandten Schenkel des Aufnahmegehäuses (12) in Verbund gebracht ist und das Aufnahmegehäuse (12) vollständig abdeckt sowie über dieses hinaus in Richtung der Fahrzeugmitte verlängert ist.

4. Fahrzeug-Dachauskleidung nach Anspruch 2 oder 3, **dadurch gekennzeichnet, daß** die Stützstruktur (18, 20) mit der Fahrzeugkarosserie verbindbar ist, indem die Dachauskleidung (10) mit den Airbag-Modulen als Ganzes an der Fahrzeugkarosserie montiert wird.

5. Fahrzeug-Dachauskleidung nach einem der Ansprüche 1 bis 4, **dadurch gekennzeichnet, daß** die Stützstruktur (18, 20) eine Vielzahl von in Längsrichtung voneinander beabstandeten Stützrippen aufweist.

6. Fahrzeug-Dachauskleidung nach Anspruch 5, **dadurch gekennzeichnet, daß** die Stützstruktur (18) einteilig mit dem Aufnahmegehäuse (12) durch Spritzgießen hergestellt ist.

7. Fahrzeug-Dachauskleidung nach einem der vorstehenden Ansprüche, **dadurch gekennzeichnet, daß** das Aufnahmegehäuse (12) mit zumindest Teilen der Stützstruktur aus einem allgemein flachen Formkörper mit wenigstens einer in Längsrichtung verlaufenden Scharnierlinie durch Zusammenklappen der Formkörperteile beiderseits der Scharnierlinie gebildet ist.

8. Fahrzeug-Dachauskleidung nach einem der vorstehenden Ansprüche, **dadurch gekennzeichnet, daß** die Scharnierlinie (32) in einem die zwei Schenkel verbindenden, gekrümmten Bodenbereich ausgebildet ist.

9. Fahrzeug-Dachauskleidung nach Anspruch 8, **dadurch gekennzeichnet, daß** eine weitere Scharnierlinie (36) an einer Kante des einen der beiden Schenkel ausgebildet ist und die über diese Scharnierlinie (36) angeschlossene Stützstruktur auf den Schenkel umgeklappt ist.

10. Fahrzeug-Dachauskleidung nach Anspruch 8, **dadurch gekennzeichnet, daß** zwischen der Stützstruktur (18) und der Kante des Schenkels Verbindungsstege über je eine Scharnierlinie angeschlossen sind.

11. Fahrzeug-Dachauskleidung nach einem der vorstehenden Ansprüche, **dadurch gekennzeichnet, daß** der die Schenkel des Aufnahmegehäuses (12) verbindende Bodenbereich aus zwei im wesentlichen halbzylinderförmigen Formteilen gebildet ist, die sich, entlang der Scharnierlinie (32) aufeinandergeklappt, zu einem langgestreckten Hohlkörper ergänzen.

12. Fahrzeug-Dachauskleidung nach einem der vorstehenden Ansprüche, **dadurch gekennzeichnet, daß** an den Hohlkörper zu den Kanten der Schenkel hin ein im wesentlichen quaderförmiger Aufnahmekanal (42) für den gefalteten Gassack (14) anschließt.

13. Fahrzeug-Dachauskleidung nach einem der vorstehenden Ansprüche, **dadurch gekennzeichnet, daß** entlang dem Boden des Aufnahmegehäuses (12) je ein starres Gas-Verteilerrohr (16) angeordnet ist.

14. Fahrzeug-Dachauskleidung nach einem der vorstehenden Ansprüche, **dadurch gekennzeichnet, daß** an einem zur C-Säule des Fahrzeugs gerichteten Fortsatz der Dachauskleidung (10) ein Gasgenerator (52) angeordnet ist, der an das aus dem Aufnahmegehäuse (12) herausragende Ende des GasVerteilerrohres (16) angeschlossen ist.

15. Fahrzeug-Dachauskleidung nach Anspruch 14, **dadurch gekennzeichnet, daß** der Gasgenerator (52) mit Befestigungselementen (54, 56) zur Befestigung an einer C-Säule des Fahrzeugs versehen ist.

16. Fahrzeug-Dachauskleidung nach einem der vorstehenden Ansprüche, **dadurch gekennzeichnet, daß** die Stützstruktur mit einem Randstreifen der Dachauskleidung (10) in Verbund ist, der sich über das Aufnahmegehäuse (12) hinaus in Richtung der Mittellinie der Dachauskleidung erstreckt.

17. Fahrzeug-Dachauskleidung nach einem der vorstehenden Ansprüche, **dadurch gekennzeichnet, daß** die Stützstruktur mit der Dachauskleidung (10) vollflächig verklebt ist.

18. Fahrzeug-Dachauskleidung nach einem der Ansprüche 1 bis 17, **dadurch gekennzeichnet, daß** durch den Verbund von Dachauskleidung (10) und Stützstruktur (18, 20) mit Stützrippen ein energieabsorbierender Aufprallschutz gebildet ist.

19. Fahrzeug-Dachauskleidung nach einem der Ansprüche 1 bis 18, **dadurch gekennzeichnet, daß** die Stützstruktur eine durch Reduzierung der Materialdicke gebildete Klapplinie (21) aufweist, entlang der auch die Dachauskleidung (10) der Aktivierung des Airbag-Moduls aufklappt.

## Claims

1. A vehicle headliner with integrated head-side airbag modules that have elongated accommodation housings (12) for one folded airbag (14) each and that are arranged along the side edges of the headliner (10), each of the accommodation housings (12), together with at least parts of a support structure (18), being formed of a generally flat shaped body (30) with at least one hinge line (32) that runs in the lengthwise direction, each of the accommodation housings being formed by folding together the shaped body parts on both sides of the hinge line (32), **characterized in that** the base area connecting the legs of the accommodation housing (12) is made up of two essentially complementary, essentially semi-cylindrical shaped parts which, when folded over onto each other along the hinge line (32), complement each other to form an elongated hollow body.

2. The vehicle headliner according to Claim 1, **characterized in that**, towards the side of the vehicle body, the accommodation housings (12) are each connected to a support structure (20) that has support ribs.

3. The vehicle headliner according to Claim 2, **characterized in that** each support structure (20) is joined to the leg of the accommodation housing (12) that faces away from the headliner (10) and covers the accommodation housing (12) completely and is extended beyond the latter towards the middle of the vehicle.

4. The vehicle headliner according to Claim 2 or 3, **characterized in that** the support structure (18, 20) is adapted to be connected to the vehicle body **in that** the headliner (10) with the airbag modules is mounted as a whole onto the vehicle body.

5. The vehicle headliner according to any of Claims 1 to 4, **characterized in that** the support structure (18, 20) has a multitude of support ribs spaced apart from each other in the lengthwise direction.

6. The vehicle headliner according to Claim 5, **characterized in that** the support structure (18) is made in one piece with the accommodation housing (12) by means of injection molding.

7. The vehicle headliner according to any of the preceding claims, **characterized in that** the accommodation housing (12), together with at least parts of the support structure, is formed of a generally flat shaped body with at least one hinge line that runs in the lengthwise direction, the accommodation housing being formed by folding together the shaped body parts on both sides of the hinge line.

8. The vehicle headliner according to any of the preceding claims, **characterized in that** the hinge line (32) is made in a curved base area that connects the two legs.

9. The vehicle headliner according to Claim 8, **characterized in that** a further hinge line (36) is formed at an edge of one of the two legs and the support structure connected via this hinge line (36) is folded over onto the leg.

10. The vehicle headliner according to Claim 8, **characterized in that**, between the support structure (18) and the edge of the leg, connection webs are connected via one hinge line each.

11. The vehicle headliner according to any of the preceding claims, **characterized in that** the base area connecting the legs of the accommodation housing (12) is made up of two essentially semi-cylindrical shaped parts which, when folded over onto each other along the hinge line (32), complement each other to form an elongated hollow body.

12. The vehicle headliner according to any of the preceding claims, **characterized in that** an essentially cuboid accommodation channel (42) for the folded airbag (14) adjoins the hollow body towards the edges of the legs.

13. The vehicle headliner according to any of the preceding claims, **characterized in that** one rigid gas distribution tube (16) each is arranged along the base of a corresponding accommodation housing (12).

14. The vehicle headliner according to any of the preceding claims, **characterized in that**, on a projection of the headliner (10) facing the C-column of the vehicle, there is arranged a gas generator (52) that is connected to the end of the gas distribution tube (16) that protrudes from the accommodation housing (12).

15. The vehicle headliner according to Claim 14, **characterized in that** the gas generator (52) is provided with attachment elements (54, 56) for attaching it to a C-column of the vehicle.

16. The vehicle headliner according to any of the preceding claims, **characterized in that** the support structure is joined to an edge strip of the headliner (10) that extends beyond the accommodation housing (12) towards the middle line of the headliner.

17. The vehicle headliner according to any of the preceding claims, **characterized in that** the support structure is glued to the headliner (10) across the entire surface.

18. The vehicle headliner according to any of Claims 1 to 17, **characterized in that** an energy-absorbing impact protection is provided by the connection of the headliner (10) and the support structure (18, 20) having support ribs.

19. The vehicle headliner according to any of Claims 1 to 18, **characterized in that** the support structure has a folding line (21) formed by a reduction of the material thickness, along which the headliner (10) also unfolds after activation of the airbag module.

## Revendications

1. Revêtement de toit de véhicule, comportant des modules d'airbags latéraux de tête qui présentent des boîtiers de réception (12) allongés pour un coussin à gaz (14) respectif plié et qui sont agencés le long des bords latéraux du revêtement de toit (10), chacun des boîtiers de réception (12), avec au moins des parties d'une structure de soutien (18), étant formé à partir d'un corps moulé (30) généralement plat avec au moins une ligne de charnière (32) s'étendant en direction longitudinale, en repliant les parties de corps moulé des deux côtés de la ligne de charnière (32), **caractérisé en ce que** la partie de fond reliant les branches du boîtier de réception (12) est formée par deux parties moulées sensiblement semi-cylindriques et sensiblement complémentaires qui, lorsqu'elles sont repliées l'une sur l'autre le long de la ligne de charnière (32), se complètent pour former un corps creux allongé.

2. Revêtement de toit de véhicule selon la revendication 1, **caractérisé en ce que** vers le côté de la carrosserie de véhicule, les boîtiers de réception (12) sont chacun reliés à une structure de soutien (20) présentant des nervures de soutien.

3. Revêtement de toit de véhicule selon la revendication 2, **caractérisé en ce que** chaque structure de soutien (20) est mise en liaison avec la branche du boîtier de réception (12), qui est détournée du revêtement de toit (10), et recouvre totalement le boîtier de réception (12) et est prolongée au-delà de celui-ci en direction du milieu du véhicule.

4. Revêtement de toit de véhicule selon l'une des revendications 2 ou 3, **caractérisé en ce que** la structure de soutien (18, 20) peut être reliée à la carrosserie du véhicule en montant le revêtement de toit (10) avec les modules d'airbags en tant qu'ensemble sur la carrosserie du véhicule.

5. Revêtement de toit de véhicule selon l'une des revendications 1 à 4, **caractérisé en ce que** la structure de soutien (18, 20) présente une multitude de nervures de soutien espacées les unes des autres en direction longitudinale.

6. Revêtement de toit de véhicule selon la revendication 5, **caractérisé en ce que** la structure de soutien (18) est réalisée d'un seul tenant avec le boîtier de réception (12) par moulage par injection.

7. Revêtement de toit de véhicule selon l'une des revendications précédentes, **caractérisé en ce que** le boîtier de réception (12) avec au moins des parties de la structure de soutien est formé à partir d'un corps moulé généralement plat avec au moins une ligne de charnière s'étendant en direction longitudinale, en repliant les parties d corps moulé des deux côtés de la ligne de charnière.

8. Revêtement de toit de véhicule selon l'une des revendications précédentes, **caractérisé en ce que** la ligne de charnière (32) est réalisée dans une région de fond recourbée reliant les deux branches.

9. Revêtement de toit de véhicule selon la revendication 8, **caractérisé en ce qu'**une autre ligne de charnière (36) est réalisée sur une arête de l'une des deux branches et la structure de soutien raccordée via cette ligne de charnière (36) est repliée sur la branche.

10. Revêtement de toit de véhicule selon la revendication 8, **caractérisé en ce que** des traverses de liaison sont raccordées entre la structure de soutien (18) et l'arête de la branche via une ligne de charnière respective.

11. Revêtement de toit de véhicule selon l'une des revendications précédentes, **caractérisé en ce que** la région de fond reliant les branches du boîtier de réception (12) est formée par deux parties moulées sensiblement semi-cylindriques qui, lorsqu'elles sont repliées l'une sur l'autre, se complètent pour former un corps allongé.

12. Revêtement de toit de véhicule selon l'une des revendications précédentes, **caractérisé en ce qu'**un canal de réception (42) sensiblement parallélépipédique pour le coussin à gaz (14) plié se raccorde au corps creux vers les arêtes des branches.

13. Revêtement de toit de véhicule selon l'une des revendications précédentes, **caractérisé en ce que** le long du fond du boîtier de réception (12) est agencé un tube de répartition de gaz (16) respectif rigide.

14. Revêtement de toit de véhicule selon l'une des revendications précédentes, **caractérisé en ce que** sur un prolongement du revêtement de toit (10) orienté vers la colonne C du véhicule est agencé un générateur de gaz (52) qui est raccordé à l'extrémité du tube de répartition de gaz (16) qui fait saillie hors du boîtier de réception (12).

15. Revêtement de toit de véhicule selon la revendication 14, **caractérisé en ce que** le générateur de gaz (52) est pourvu d'éléments de fixation (54, 56) pour sa fixation sur une colonne C du véhicule.

16. Revêtement de toit de véhicule selon l'une des revendications précédentes, **caractérisé en ce que** la structure de soutien est en liaison avec une bande de bordure du revêtement de toit (10) qui s'étend via le boîtier de réception (12) en direction de la ligne médiane du revêtement de toit.

17. Revêtement de toit de véhicule selon l'une des revendications précédentes, **caractérisé en ce que** la structure de soutien est collée sur toute sa surface avec le revêtement de toit (10).

18. Revêtement de toit de véhicule selon l'une des revendications 1 à 17, **caractérisé en ce qu'**une protection d'impact absorbant l'énergie est formée par la liaison du revêtement de toit (10) et de la structure de soutien (18, 20) avec des nervures de soutien.

19. Revêtement de toit de véhicule selon l'une des revendications 1 à 18, **caractérisé en ce que** la structure de soutien présente une ligne de pliage (21) formée par une réduction de l'épaisseur de matériau, le long de laquelle le revêtement de toit (10) se déplie aussi après l'activation du module d'airbag.
